# EUROPÄISCHE PATENTSCHRIFT

(11) **EP 1 430 766 B1**
(45) Veröffentlichungstag und Bekanntmachung des Hinweises auf die Patenterteilung: **03.05.2017**
(21) Anmeldenummer: 03027520.0
(22) Anmeldetag: 29.11.2003
(51) Int. Cl.: A01F 15/07

(54) **Vorrichtung zum Steuern der Bewegung einer Transportvorrichtung**
Device for controlling the movement of a transporting device
Dispositif pour contrôler le mouvement d'un dispositif de transport

(30) Priorität: 14.12.2002 DE 10258529
(43) Veröffentlichungstag der Anmeldung: 23.06.2004
(73) Patentinhaber: Deere & Company, Moline, IL 61265 (US)
(72) Erfinder: Biziorek, Stéphane, 70600 Champlitte (FR); Viaud, Jean, 70100 Gray (FR)
(74) Vertreter: Magin, Ludwig Bernhard

(56) Entgegenhaltungen:
- WO-A-90/14756
- GB-A- 2 221 203
- US-A- 4 793 124
- US-A- 6 050 052
- US-A- 6 068 059
- US-B1- 6 347 500

## Beschreibung

Die Erfindung betrifft eine Vorrichtung zum Steuern der Bewegung einer Transportvorrichtung einer Landmaschine.

Die EP-A1-865 723 offenbart eine Rundballenpresse mit einer daran anschließenden Wickelvorrichtung. Ein von der Rundballenpresse abgegebener Rundballen wird mittels eines Transportschlittens zur Wickelvorrichtung bewegt, wo er mit Folie umwickelt wird.

Die US 6 347 500 B1 offenbart einen Ballenwickler mit einem auf Führungsschienen transportierbaren Wickeltisch in Form eines Schlittens und einer Wickelvorrichtung, wobei der Wickeltisch einen gepressten Ballen abstützt und hydraulisch angetrieben in den Bereich der Wickelvorrichtung bringt.

Das der Erfindung zugrunde liegende Problem wird darin gesehen, dass es schwierig ist, den Schlitten stets genau in die erforderliche Stellung zu bringen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der erfasste Weg mit der festgestellten Position der Transportvorrichtung in Beziehung gebracht, verglichen und notfalls korrigiert werden. Der Lagesensor kann vielfältig ausgeführt werden, z. B. als Näherungssensor, als Berührungssensor, als Schall- oder Lichtwellensensor oder dergleichen. Der Wegsensor ist so ausgebildet, dass er feststellt, wie weit sich die Transportvorrichtung bewegt hat. Dies kann durch eine Erfassung an einer Vielzahl von Stellen, mittels Inkrementalgebern oder dergleichen erfolgen. Die Transportvorrichtung kann z. B. Ballen, Erntegüter oder dergleichen von einer Stelle zu einer anderen Stelle bringen, wobei sie eine oder beide der Stellen exakt ansteuern muss, damit eine korrekte Weiterbehandlung erfolgen kann.

Mittels mehrerer Lagesensoren kann mehr als nur eine bestimmte Stellung erfasst werden; es kann damit festgestellt werden, ob sich die Transportvorrichtung innerhalb eines Bereichs befindet und in welcher Richtung sie diesen gegebenenfalls verlässt, z. B. aufgrund der Einwirkung der Schwerkraft am Hang, bei Leckagen in einem Hydrauliksystem, etc.

Die Verwendung eines Schrittmotors hat den Vorteil, dass dieser exakt weiss, welchen Weg er zurück gelegt hat bzw. welchen Weg, d. h. wie viele Umdrehungen, er zurücklegen muß.

Ein Rechner schafft die Möglichkeit, flexibel auf die Signale zu reagieren bzw. neue Ausgangssignale zu berechnen. Z. B. kann aus den von den Lagesensoren erhaltenen Signalen festgestellt werden, dass die Transportvorrichtung zu früh oder zu spät angehalten wurde, und dann als Reaktion der Antrieb der Transportvorrichtung früher oder später unterbrochen werden.

Mittels eines Geschwindigkeitssensors kann der Antrieb der Transportvorrichtung vor Erreichen einer bestimmten Stellung verlangsamt werden, um eine sanfte Annäherung zu erreichen. Der Geschwindigkeitssensor kann ein separater Sensor sein, er kann aber auch aus dem Wegsensor gebildet bzw. dessen Signale hierzu gebildet werden.

Die Verwendung eines Indexrades und eines Impulszählers, also eines Pulsgebers und eines Pulszählers, stellt eine einfache, zuverlässige und günstige Weise dar, den zurückgelegten Weg sicher zu erfassen. Z. B. kann ein ohnehin vorhandenes Zahn- oder Kettenrad, oder ein separates profiliertes oder gelochtes Rad verwendet werden. Die Impulse können über Wellen, auch Licht- oder Magnetwellen, erfasst werden.

Ein endloses Zugmittel, z. B. eine Kette, ein Riemen, ein Seil oder dergleichen, das um zwei Wellen geschlungen und bewegt wird, bewegt die Transportvorrichtung entlang einer vorgegebenen Strecke, die einfach zu überwachen ist.

Die Anwendung der erfindungsgemäßen Vorrichtung bei einer Ballenpresse, aus der ein Ballen z. B. zu einer Wickelvorrichtung befördert wird, hat den Vorteil, dass eine Fehlpositionierung vermieden wird, was z. B. dafür sorgt, dass der Ballen die Wickelfolie richtig erfasst, dass sich die Transportvorrichtung im Auslassbereich des Pressraums befindet, und dergleichen.

In der Zeichnung ist ein nachfolgend näher beschriebenes Ausführungsbeispiel der Erfindung dargestellt. Es zeigt:
- Fig. 1: eine Landmaschine mit einer Transportvorrichtung,
- Fig. 2: eine Führung der Transportvorrichtung mit einem Wegsensor und zwei Lagesensoren in perspektivischer Ansicht und
- Fig. 3: einen Steuerkreis einer Vorrichtung zum Steuern der Bewegung der Transportvorrichtung.

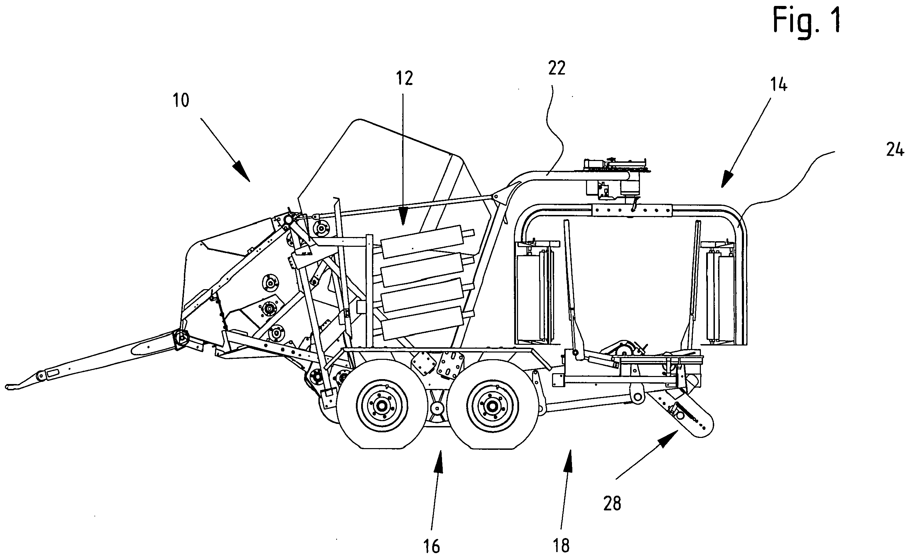

Eine in Figur 1 gezeigte Landmaschine 10 enthält im Wesentlichen einen Pressenzusammenbau 12 und eine Wickelvorrichtung 14, die auf einem gemeinsamen Fahrgestell 16 befestigt sind und zwischen denen sich ein Transportsystem 18 erstreckt, das von einer erfindungsgemäßen Vorrichtung 20 gesteuert wird.

Die Landmaschine 10 ist in diesem Ausführungsbeispiel als eine Rundballenpresse ausgebildet; sie könnte auch eine Quaderballenpresse oder eine andere Landmaschine sein, z. B. eine Tabakverarbeitungsmaschine, die Tabakbündel zwischen Verarbeitungsstationen bewegt. Eine genauere Beschreibung der Landmaschine 10, auf die hier bezug genommen wird, kann der DE 100 44 166 entnommen werden.

Der Pressenzusammenbau 12 kann z. B. wie in der DE 199 48 849 beschrieben ausgebildet sein.

Die Wickelvorrichtung 14 enthält einen Tragarm 22 am rückwärtigen oberen Bereich des Pressenzusammenbaus 12, an dessen Unterseite ein drehbarer Wickelarmzusammenbau 24 angebracht ist, in dessen Zentrum ein nicht gezeigter Ballen zum Bewickeln mit Folie angeordnet werden kann.

Das Fahrgestell 16 nimmt den Pressenzusammenbau 12, die Wickelvorrichtung 14 und das Transportsystem 18 auf, um gemeinsam ein gezogenes oder selbstfahrendes Fahrzeug, die Landmaschine 10, zu bilden.

Das Transportsystem 18 enthält unter anderem eine Führung 26, eine Transportvorrichtung 28, einen Antrieb 30 und die Vorrichtung 20.

Das Transportsystem 18 hat in diesem Ausführungsbeispiel die Aufgabe, den aus dem Pressenzusammenbau 12 abgegebenen Ballen aufzunehmen, nach hinten zu der Wickelvorrichtung 14 zu bewegen, während des Wickelvorgangs zu tragen und schließlich auf den Boden abzulegen. Hierzu bringt es die Transportvorrichtung 28 in verschiedene vorgegebene Stellungen.

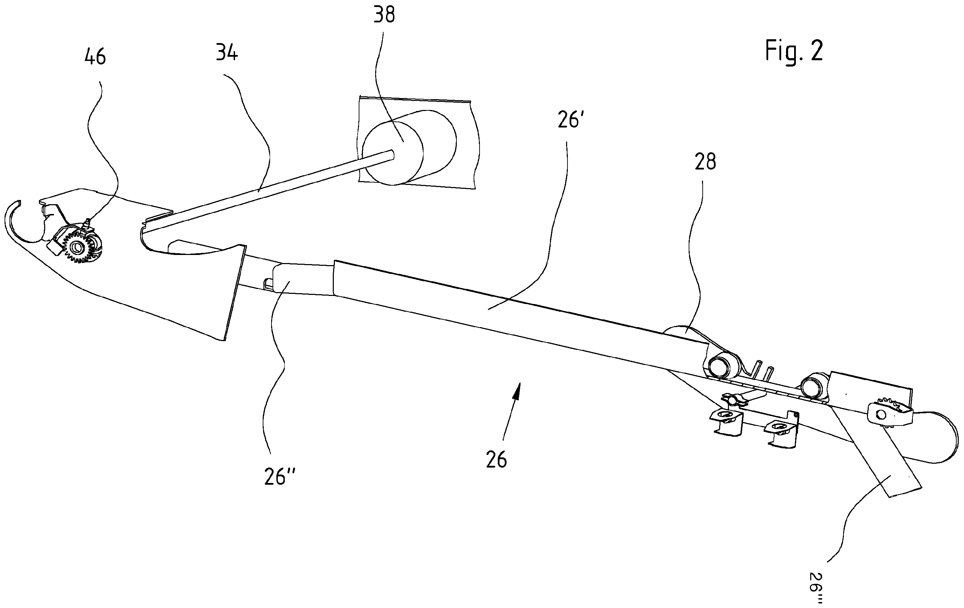

Die Führung 26 ist in diesem Ausführungsbeispiel von zwei parallelen und sich in der Fahrtrichtung der Landmaschine 10 erstreckenden Schienen gebildet, von denen in Figur 2 nur die in Fahrtrichtung links gelegene gezeigt ist. Diese Führung 26 weist einen längeren im Wesentlichen waagrechten mittleren Abschnitt 26', einen vorderen etwas tiefer gelegenen Abschnitt 26" und einen rückwärtigen Abschnitt 26"' auf, der unter einer Neigung von circa 45 Grad zum Boden abfällt. Während der vordere und der rückwärtige Abschnitt 26" und 26"' ungefähr gleich lang sind, ist der mittlere Abschnitt 26' circa dreimal so lang wie der vordere oder der rückwärtige. Je nach den räumlichen Gegebenheiten kann der vordere Abschnitt 26" entfallen und wie der mittlere ausgebildet sein. Auch der rückwärtige Abschnitt 26"' stellt nur eine vorteilhafte Weiterentwicklung dar. Die für die Führung 26 verwendeten Schienen haben einen U-förmigen Querschnitt, der sich zur Längsmittenebene der Landmaschine 10 hin öffnet. Die Führung 26 ist mittels geeigneter Mittel direkt oder indirekt an das Fahrgestell 16 angebracht und erstreckt sich im Wesentlichen unterhalb des Tragarms 22.

Die Transportvorrichtung 28 ist in diesem Ausführungsbeispiel in der Art eines Schlittens ausgebildet, der in der Fahrtrichtung der Landmaschine 10 in, auf oder an und entlang der Führung 26 bewegt wird. Die Transportvorrichtung 28 nimmt die Funktion eines Wickeltisches einer bekannten Wickelvorrichtung wahr, d. h. sie weist eine nicht näher bezeichnete und gezeichnete Auflage aus Riemen oder Rollen auf, die muldenförmig angeordnet sind, einen Ballen aufnehmen und in Drehung um seine Mittenachse versetzen können, wie dies an sich bekannt ist. Hierzu ist z. B. ein nicht gezeigter Hydraulikmotor vorgesehen. Die Transportvorrichtung 28 ist mit Rollen 32 versehen, die in der Führung 26 aufgenommen sind. Es sind Rollen 32 auf zwei zueinander parallelen und quer zu der Haupterstreckungsrichtung der Führung 26 angeordneten Achsen vorgesehen, so dass die Transportvorrichtung 28 nicht in der Führung 26 kippen kann. Die Transportvorrichtung 28 kann zwischen dem rückwärtigen Ende des dritten Abschnitts 26"' und dem vorderen Ende des ersten Abschnitts 26" bewegt werden und hält vor dem dritten Abschnitt 26'" an, um den Ballen in der Wickelstellung zu positionieren.

Der Antrieb 30 ist in diesem Ausführungsbeispiel mit zwei Wellen 34, einem Zugmittel 36 und einem Motor 38 versehen.

Von den zwei Wellen 34 - jeweils eine am Ende der Zugmitteltrume - ist nur die vordere gezeigt, die sich quer zur Bewegungsrichtung der Transportvorrichtung 28 erstreckt. Anstelle durchgehender Wellen 34 könnten auch einzelne Zahnräder auf jeder Seite des Transportsystems 18 verwendet werden, um die Zugmittel 36 geschlungen sind. Andererseits können auch mehr als zwei Wellen 34 vorgesehen werden.

Das Zugmittel 36 ist in diesem Ausführungsbeispiel als zwei endlose und um die Wellen 34 umlaufende Ketten ausgebildet, die mit den Wellen 34 über nicht gezeigte Zahnräder drehfest in Verbindung stehen. An einem der Trume des Zugmittels 36, dem unteren, ist die Transportvorrichtung 28 befestigt, so dass diese bei vor- oder zurück bewegtem Zugmittel 36 über die Länge der Führung 26 verfahren wird.

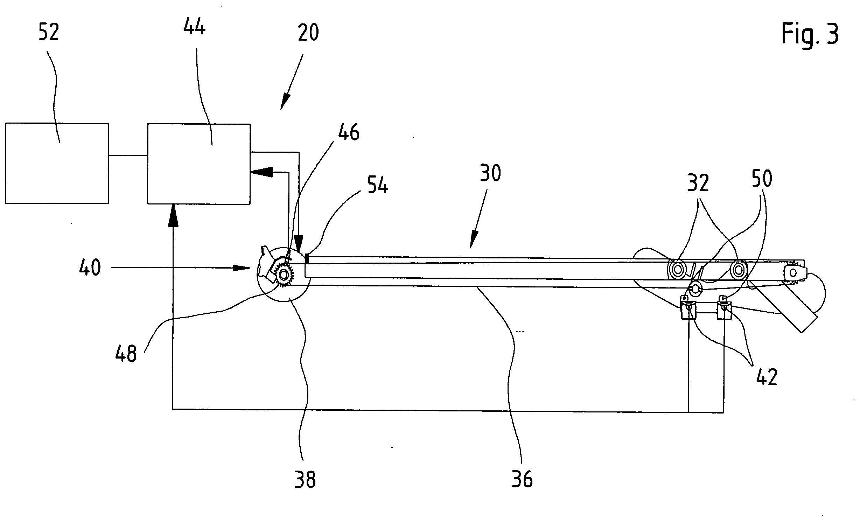

Der Motor 38 ist als ein Hydraulikmotor ausgebildet, der von der Landmaschine 10 oder einem Zugfahrzeug mit Energie versorgt wird. Der Motor 38 ist direkt oder über ein Getriebe mit einer der Wellen 34 verbunden, versetzt diese in Drehung und zieht somit an dem oberen oder unteren Trum, um die Transportvorrichtung 28 zu bewegen. Der Motor 38 kann in seiner nicht beaufschlagten Stellung sich selbst halten bzw. von geschlossenen Ventilen gehalten werden. Die Ansteuerung des Motors 38 durch Öffnen und Schließen von Ventilen erfolgt über die Vorrichtung 20 gemäß Figur 3. Anstelle der Ausbildung als Hydraulikmotor könnte auch eine als Elektromotor gewählt werden.

Anstelle der Wellen 34 und des Zugmittels 36 könnte auch ein Motor 38 direkt an der Transportvorrichtung 28 befestigt sein, der sich auf einer Auflage, z. B. einer Zahnstange, in oder an der Führung 26 bewegt und dabei die Transportvorrichtung 28 direkt mitnimmt.

Die Vorrichtung 20 zum Steuern der Bewegung der Transportvorrichtung 28 weist einen Wegsensor 40, in diesem Ausführungsbeispiel zwei Lagesensoren 42 und einen Rechner 44 auf.

Die Vorrichtung 20 hat die Aufgabe dafür zu sorgen, dass sich die Transportvorrichtung 28 jeweils an der richtigen Stelle befindet. Hierzu wird sie elektronisch gesteuert.

Der Wegsensor 40 enthält einen Pulszähler 46 und einen Pulsgeber 48, wobei letzterer z. B. als ein Zahn- oder Kettenrad auf der angetriebenen Welle 34 ausgebildet ist. Der Pulszähler 46 gibt ein den gezählten Impulsen entsprechendes Signal an den Rechner 44. Dieses Signal entspricht der Drehzahl der Welle 34 und somit dem von dem Zugmittel 36 zurückgelegten Wegstrecke. Letztlich kann aus dem Signal also abgeleitet werden, an welcher Stelle der Führung 26 sich die Transportvorrichtung 28 gerade befindet. Der Wegsensor 40 könnte auch in einen als Schrittmotor ausgebildeten Motor 38 integriert sein.

Jeder Lagesensor 42 wirkt mit einem Referenzteil 50 an der Transportvorrichtung 28 zusammen, wobei sich beide nur in einer bestimmten Stellung der Transportvorrichtung 28 gegenüberstehen. Selbst wenn also ein Lagesensor 42 ausfällt, erkennt der zweite noch die Lage der Transportvorrichtung 28.

Die Verwendung von zwei Referenzteilen, hat den weiteren Vorteil, dass sowohl eine Bewegungsrichtung als auch eine Bewegungsgeschwindigkeit ermittelt werden kann.

Die Referenzteile 50 sind so angeordnet, dass sich die Transportvorrichtung 28 exakt im Zentrum des sich drehenden Wickelarmzusammenbaus 24 befindet, wenn das Signal erzeugt wird. In dem Fall, dass eine Wickelvorrichtung 14 mit einem feststehenden Folienspender und einem sich drehenden Ballenwickeltisch verwendet wird, stellt der Lagesensor 42 mit dem Referenzteil 50 sicher, dass sich die als Ballenwickeltisch funktionierende Transportvorrichtung 28 in der richtigen Stellung zu dem Folienspender befindet und in dieser bleibt.

Jeder Lagesensor 42 kann entweder so ausgebildet werden, dass er beim Passieren einer Kante einen Impuls liefert oder wenn ihm eine bestimmte Reflexionsfläche gegenüberliegt.

Der Rechner 44 wird vorzugsweise mit Software gesteuert und nimmt die Signale von dem Wegsensor 40 und den Lagesensoren 42 auf, um daraus die Bewegung des Motors 38 zu steuern. Vorzugsweise ist die Software so intelligent, dass sie aus den jeweiligen Signalen den Weg der Transportvorrichtung 28 jeweils neu berechnen und somit auch korrigieren kann. Der Rechner 44 kann darüber hinaus Signale an den Pressenzusammenbau 12 und/oder die Wickelvorrichtung 14 geben, die dafür sorgen, dass ein Ballen nicht aus dem Pressenzusammenbau 12 abgegeben wird, wenn sich die Transportvorrichtung 28 nicht in der Aufnahmestellung befindet, und dass die Wickelvorrichtung 14 nicht zu wickeln beginnt, wenn sich die Transportvorrichtung 28 nicht mittig unter dem Wickelarmzusammenbau 24 befindet. Folglich können Schäden an dem Pressenzusammenbau 12 und an dem Ballen vermieden werden. Außerdem kann vermieden werden, dass Folie abgerollt wird, obwohl kein Ballen gewickelt wird. Schließlich kann auch die Ablegung des Ballens auf dem Boden mittels des Rechners 44 gesteuert werden. Der Rechner 44 ist mit einer Anzeige- und Eingabeeinheit 52 verbunden, die sich auf dem Zugfahrzeug befinden kann. Als weitere Hilfe für die Signalgewinnung ist ein Anschlag 54 an der Führung 26 vorgesehen.

Das in dem Rechner 44 installierte Programm ist in der Lage, mittels des Wegsensors 40 den Weg, d. h. die Umdrehungszahl des Pulsgebers 48 bzw. der Welle 34 zu zählen und mittels der Lagesensoren 42 zu ermitteln, wie oft sich die Welle 34 drehen muss, bis die Transportvorrichtung 28 ihre Endstellung unter dem Wickelarmzusammenbau 24 erreicht hat. Desgleichen wird der Weg bis zu dem Anschlag 54 zurück gemessen. Spätestens dann, wenn keine weiteren Impulse mehr gezählt werden können, obwohl dem Motor 38 Energie zugeführt wird, liegt die Transportvorrichtung 28 an dem Anschlag 54 an. Das Programm in dem Rechner 44 lernt dann, dass es bei dem nächsten Zyklus die Transportvorrichtung 28 kurz vor dem Erreichen des Anschlags anhält. Das Programm kann so gestaltet werden, dass es in bestimmten Abständen die Transportvorrichtung 28 wieder bis zum Anschlag 54 fährt, um das System gewissermaßen zu eichen. Die Lagesensoren 42 erkennen, wann sich die Transportvorrichtung 28 gegenüber dem Referenzteil 50 befindet, wobei der vorne angeordnete Lagesensor 42 zwei Impulse wahrnimmt, bevor die Transportvorrichtung 28 angehalten wird. Wenn während des Betriebs, z. B. wegen Unebenheiten, wegen Hangneigung, aufgrund von Leckagen in dem Motor 38 oder dergleichen die Transportvorrichtung 28 nach vorne oder hinten rollt, wird wenigstens einer der Lagesensoren 42 diese Bewegung erkennen. Je nachdem, welcher Lagesensor 42 einen Impuls aufnimmt, bewegt sich die Transportvorrichtung 28 nach vorne oder nach hinten. Der Rechner 44 gibt dann ein entsprechendes Ausgangssignal an den Motor 38, um diese Abweichung wieder zu beheben. Der Rechner 44 kann aus dem Abstand der Impulse auch die Geschwindigkeit der Transportvorrichtung 28 ableiten und steuern und so erreichen, dass die Transportvorrichtung 28 langsam an die vordere und/oder rückwärtige Stellung herangefahren wird. Schließlich kann der Rechner 44 die Transportvorrichtung 28 auch über die Wickelstellung hinaus in eine noch weiter rückwärtig gelegene gekippte Abgabestellung bewegen, wobei der Weg wieder mittels des Wegsensors 40 bestimmt wird.

## Patentansprüche

1. Vorrichtung (20) zum Steuern der Bewegung einer Transportvorrichtung (28) einer Landmaschine (10) mit wenigstens einem Lagesensor (42) zur Erkennung wenigstens einer bestimmten Lage und wenigstens einem Wegsensor (40) zum Erkennen des zurückgelegten Wegs der Transportvorrichtung (28), **dadurch gekennzeichnet, dass** zwei in der Bewegungsrichtung der Transportvorrichtung (28) voneinander beabstandete Lagesensoren (42) vorgesehen sind, die jeweils mit einem Referenzteil (50) an der Transportvorrichtung (28) zusammenwirken, wobei sich beide nur in einer bestimmten Stellung gegenüberstehen und wobei die Referenzteile (50) so angeordnet sind, dass sich die Transportvorrichtung (28) exakt im Zentrum eines sich drehenden Wickelarmzusammenbaus befindet, wenn ein Signal erzeugt wird.

2. Vorrichtung nach Anspruch 1, **dadurch gekennzeichnet, dass** zum Antrieb der Transportvorrichtung (28) ein Schrittmotor verwendet wird.

3. Vorrichtung nach einem oder mehreren der vorherigen Ansprüche, **gekennzeichnet durch** einen Rechner (44) zum Errechnen wenigstens einer Stellung der Transportvorrichtung (28) abhängig von den Signalen des Lagesensors (42) und des Wegesensors (40), der auf einen Antrieb (30) der Transportvorrichtung (28) wirkt.

4. Vorrichtung nach einem oder mehreren der vorherigen Ansprüche, **dadurch gekennzeichnet, dass** ein Geschwindigkeitssensor zum Erfassen der Bewegungsgeschwindigkeit der Transportvorrichtung (28) vorgesehen ist.

5. Vorrichtung nach einem oder mehreren der vorherigen Ansprüche, **dadurch gekennzeichnet, dass** der Wegsensor (40) einen mit einer treibenden Welle (34) verbundenen Pulsgeber (48) und einen Pulszähler (46) aufweist.

6. Vorrichtung nach einem oder mehreren der vorherigen Ansprüche, **dadurch gekennzeichnet, dass** der Wegsensor (40) eine Vielzahl entlang der Bewegungsstrecke angeordneter Sensoren oder Referenzteile enthält, die mit einem Referenzteil oder Sensor an der Transportvorrichtung (28) zusammen wirken können.

7. Vorrichtung nach einem oder mehreren der vorherigen Ansprüche, **dadurch gekennzeichnet, dass** auf die Transportvorrichtung (28) ein endloses Zugmittel (36) wirkt, das um zwei drehbare Wellen (34) geschlungen ist, von denen wenigstens eine mittels eines als Hydraulik- oder Elektromotor ausgebildeten Motors (38) angetrieben wird.

8. Landmaschine, insbesondere Ballenpresse, mit einer Transportvorrichtung (28) zum Transportieren eines Ballens von einer Entladestelle zu einer Weiter- oder Abgabestelle mit einer Vorrichtung (20) nach einem oder mehreren der vorherigen Ansprüche.

## Claims

1. Device (20) for controlling the movement of a transporting device (28) for controlling the movement of a transportation device (28) of an agricultural machine (10) with at least one position sensor (42) for detecting at least one specific position and at least one travel sensor (40) for detecting the distance travelled by the transportation device (28), **characterized in that** two position sensors (42) which are spaced apart from one another in the direction of movement of the transportation device (28) and which interact with the reference part (50) on the transportation device (28) are provided, wherein the two position sensors (42) are located opposite one another in a specific position and wherein the reference parts (50) are arranged in such a way that the transportation device (28) is located precisely in the centre of a rotating winding arm assembly when a signal is generated.

2. Device according to Claim 1, **characterized in that** a stepping motor is used to drive the transportation device (28).

3. Device according to one or more of the preceding claims, **characterized by** a computer (44) for calculating at least one position of the transportation device (28) as a function of the signals of the position sensor (42) and of the travel sensor (40) which acts on a drive (30) of the transportation device (28).

4. Device according to one or more of the preceding claims, **characterized in that** a speed sensor is provided for detecting the speed of movement of the transportation device (28).

5. Device according to one or more of the preceding claims, **characterized in that** the position sensor (40) has a pulse generator (48) which is connected to a driving shaft (34), and a pulse counter (46).

6. Device according to one or more of the preceding claims, **characterized in that** the travel sensor (40) contains a multiplicity of sensors or reference parts which are arranged along the movement path and which can interact with a reference part or sensor on the transportation device (28).

7. Device according to one or more of the preceding claims, **characterized in that** an endless traction means (36) acts on the transportation device (28), which traction means (36) is wrapped around two rotatable shafts (34), at least one of which is driven by means of a motor (38) which is embodied as a hydraulic motor or electric motor.

8. Agricultural machine, in particular a bale press, having a transportation device (28) for transporting a bale from a discharge point to a conveying point or output point with a device (20) according to one or more of the preceding claims.

## Revendications

1. Dispositif (20) pour commander le mouvement d'un dispositif de transport (28) d'une machine agricole (10), comprenant au moins un capteur de position (42) destiné à reconnaître au moins une position définie et au moins un capteur de déplacement (40) destiné à reconnaître la course parcourue du dispositif de transport (28), **caractérisé en ce qu'**il existe deux capteurs de position (42) espacés l'un de l'autre dans le sens de déplacement du dispositif de transport (28), lesquels coopèrent respectivement avec une pièce de référence (50) sur le dispositif de transport (28), les deux ne se faisant mutuellement face que dans une position donnée, et les pièces de référence étant disposées de telle sorte que le dispositif de transport (28) se trouve exactement au centre d'un assemblage de bras d'enroulement lorsqu'un signal est généré.

2. Dispositif selon la revendication 1, **caractérisé en ce qu'**un moteur pas à pas est utilisé pour l'entraînement du dispositif de transport (28).

3. Dispositif selon une ou plusieurs des revendications précédentes, **caractérisé par** un ordinateur (44) destiné à calculer au moins une position du dispositif de transport (28) en fonction des signaux du capteur de position (42) et du capteur de course (40), lequel agit sur le mécanisme d'entraînement du dispositif de transport (28).

4. Dispositif selon une ou plusieurs des revendications précédentes, **caractérisé en ce qu'**il existe un capteur de vitesse destiné à détecter la vitesse de déplacement du dispositif de transport (28).

5. Dispositif selon une ou plusieurs des revendications précédentes, **caractérisé en ce que** le capteur de course (40) possède un codeur à impulsions (48) relié à un arbre moteur (34) et un compteur d'impulsions (46).

6. Dispositif selon une ou plusieurs des revendications précédentes, **caractérisé en ce que** le capteur de course (40) contient une pluralité de capteurs ou de pièces de référence disposés le long du trajet de déplacement, lesquels peuvent coopérer avec une pièce de référence ou un capteur sur le dispositif de transport (28).

7. Dispositif selon une ou plusieurs des revendications précédentes, **caractérisé en ce qu'**un moyen de traction continu (36) agit sur le dispositif de transport (28), lequel passe autour de deux arbres (34) pouvant tourner dont au moins un est entraîné au moyen d'un moteur (38) réalisé sous la forme d'un moteur hydraulique ou électrique.

8. Machine agricole, notamment presse à balles, équipée d'un dispositif de transport (28) destiné à transporter une balle d'un côté de déchargement vers un côté de transfert ou de dépose, comprenant un dispositif (20) selon une ou plusieurs des revendications précédentes.
